# FASCICULE DE BREVET EUROPEEN

(11) **EP 0 340 486 B1**
(45) Date de publication et mention de la délivrance du brevet: **07.01.1993**
(21) Numéro de dépôt: 89106368.7
(22) Date de dépôt: 11.04.1989
(51) Int. Cl.: H04M 1/02, E05C 1/04

(54) **Montage mécanique de sécurité électrique dans un poste ou terminal téléphonique**
Mechanische Vorrichtung zur elektrischen Sicherheit in einem Telefonapparat oder Endgerät
Mechanical assembly for electrical security in a telephone set or terminal

(30) Priorité: 12.04.1988 FR 8804826
(43) Date de publication de la demande: 08.11.1989
(73) Titulaire: ALCATEL BUSINESS SYSTEMS, F-75008 Paris (FR)
(72) Inventeur: Beauval, Didier, F-76550 Offranville (FR)
(74) Mandataire: Weinmiller, Jürgen

(56) Documents cités:
- DE-A- 2 841 770
- DE-A- 3 003 554
- DE-A- 3 346 543
- GB-A- 2 182 019
- US-A- 1 549 470

## Description

La présente invention concerne les postes ou terminaux téléphoniques.

Les normes de sécurité imposent qu'aucune partie d'un poste ou terminal téléphonique accessible à la main, sans outil, ne soit susceptible d'être mise à un potentiel électrique dangereux pour l'usager. Dans les postes téléphoniques simples, cette condition est respectée en prévoyant des boîtiers qui ne puissent être ouverts sans outils grâce à l'utilisation de vis ou de têtons de blocage qui ne peuvent pas être débloqués sans tournevis. Pour certains terminaux téléphoniques qui nécéssitent des boîtiers avec trappes par exemple de logement de pile ou de cassette de répondeur téléphonique, on utilise encore des trappes bloquées par des verrous à vis mais cela est mal commode pour l'usager qui n'a pas toujours à sa disposition un tournevis lorsqu'il doit changer une pile ou une cassette. Différents types de fermetures de trappe pour des postes téléphoniques sout connus des documents suivants:
DE-A-3 346 543
DE-A-3 003 554
DE-A-2 841 770
La présente invention a pour but d'assurer la sécurité électrique d'un poste ou terminal téléphonique ayant un boîtier avec trappe pour le logement d'un composant amovible tout en préservant la commodité de manipulation de l'usager.

Elle a pour objet un montage mécanique de sécurité électrique dans un poste ou terminal téléphonique comportant un boîtier avec trappe. Ce montage mécanique consiste en un verrou coulissant de fermeture de la trappe présentant, à l'extérieur du boîtier, un tête d'actionnement qui, en position de fermeture, s'encastre dans la paroi latérale du boîtier en ne laissant apparaître que de surfaces lisses sans aspérités, l'une de ces surfaces étant percée d'un trou d'accrochage pour une pointe telle que celle d'un trombone ou d'un stylo bille qui sont des objets que l'on trouve couramment près d'un téléphone.

Selon un mode préféré de réalisation, le verrou coulissant comporte une gâche solidaire de la trappe coopérant avec un pêne réuni à la tête d'actionnement par une tirette à section rectangulaire qui coulisse à l'intérieur de la paroi du boîtier et qui est pourvue d'un crantage élastique maintenant le verrou en position fermée.

D'autres caractéristiques et avantages de l'invention ressortiront de la description ci-après d'un mode de réalisation donné à titre d'exemple. Cette description sera faite en regard du dessin dans lequel :
- la figure 1 est une vue partielle, en perspective, d'un socle de poste téléphonique avec une trappe dont le verrou est démonté,
- la figure 2 est une vue, en perspective globale, du socle de poste téléphonique représenté partiellement à la figure 1 et
- la figure 3 est une vue en coupe du verrou selon la ligne III-III de la figure 1.

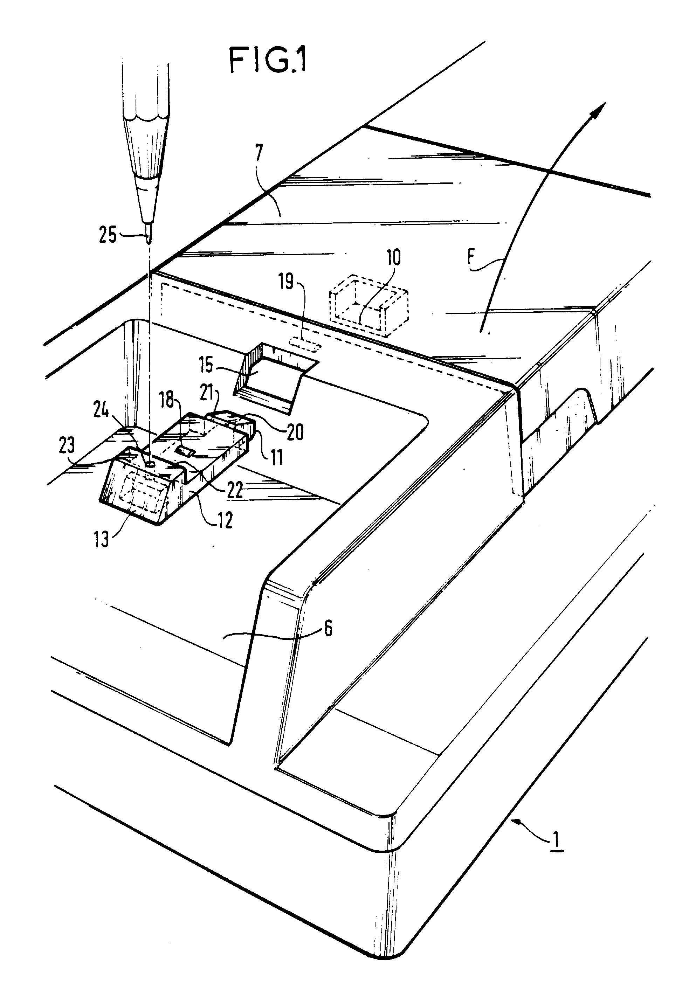

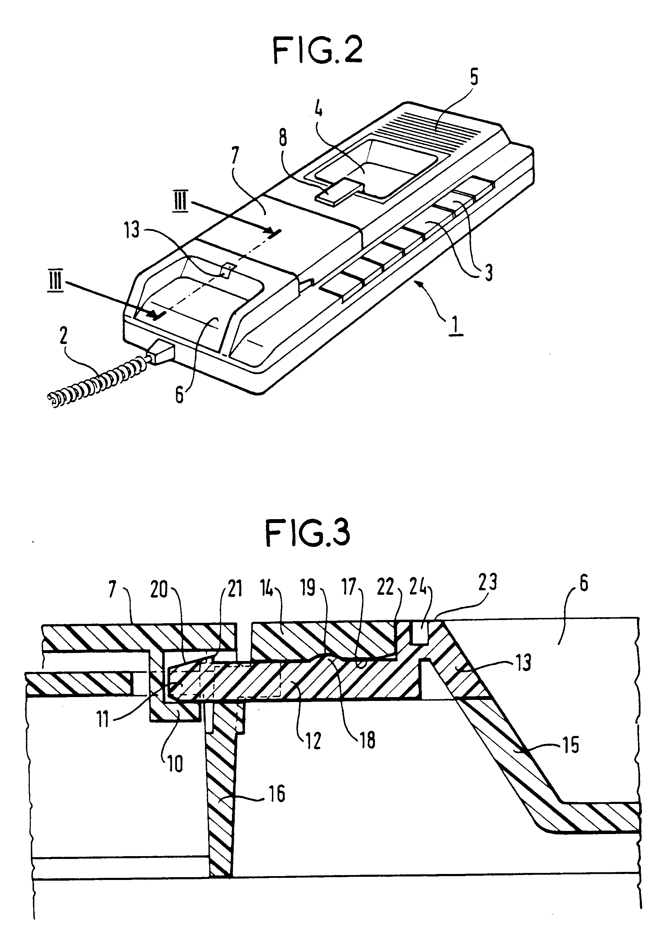

Les figures 1 et 2 représentent un socle 1 de poste téléphonique mural sans le combiné téléphonique qui lui est raccordé par un fil 2 dont le départ est visible à la base du socle 1. Ce socle 1 de poste téléphonique renferme les éléments d'un répondeur téléphonique à cassette et haut-parleur. Il a une forme rectangulaire allongée. Pourvu sur le côté droit d'une rangée de touches 3 pour la commande du répondeur, il est creusé de deux alvéoles rectangulaires superposés 4, 6 constituant les emplacements au repos des extrémités du combiné téléphonique. L'un 4 des alvéoles est placé au-dessous d'une grille 5 recouvrant un logement pour le haut-parleur du répondeur tandis que l'autre 6 est placé en dessous d'une trappe basculante 7 recouvrant un logement pour la cassette du répondeur. Un crochet 8 placé au bas de l'alvéole supérieur 4 maintient le combiné téléphonique en place sur le socle lorsqu'il est raccroché.

La trappe 7 bascule à l'ouverture dans le sens de la flèche F (figure 1) pour donner accès à la cassette du répondeur. Comme elle n'a pas à être souvent ouverte, la cassette d'un répondeur ne se changeant pas de manière systématique, il est possible d'assurer la sécurité électrique de l'usager sans lui procurer une gène excessive, en la bloquant par un verrou coulissant qui ne puisse être ouvert à la main sans un outil tel qu'une pointe de trombone ou de stylo à bille qui sont des objets que l'on trouve couramment à la portée d'un téléphone. Ce verrou plus particulièrement détaillé aux figures 1 et 3 comporte une gâche 10 solidiaire de la paroi intérieure de la trappe 7 dans laquelle pénètre un pêne 11 placé à une extrémité d'une tirette 12 coulissant dans la paroi du socle 1 et se terminant à l'autre extrémité par une tête d'actionnement 13 accessible de l'alvéole inférieur 6.

La tirette 12 a une section transversale rectangulaire. Elle coulisse en frottant sous la paroi supérieure du socle 1 au travers de deux ouvertures alignées, l'une pratiquée au travers de la paroi latérale 15 de l'alvéole inférieur 6 et l'autre au travers d'une cloison interne 16 constituant une paroi latérale du logement de cassette du répondeur. Sa face supérieure frotte contre la face inférieure 17 de la paroi supérieure du socle 1 et présente un bossage élastique 18 coopérant avec un cavité 19 de cette face inférieure 17 pour constituer un crantage maintenant le verrou en position fermée.

Le pêne 11 a sur le dessus un pente oblique 20 permettant à la gâche 10 de le repousser en position d'ouverture s'il ne l'est pas déjà lors de la fermeture de la trappe 7. Cette pente oblique 20 se termine au-dessus de la tirette 12 par un bec en relief 21 qui limite le mouvement à l'ouverture du verrou en venant buter contre la paroi supérieure du socle 1.

La tête d'actionnement 13 dépasse en hauteur de la tirette 12 et présente, à son point d'attache avec cette dernière, un épaulement 22 qui limite le mouvement de fermeture du verrou en venant buter contre la paroi supérieure du socle 1. En position de fermeture, elle s'encastre à ras dans la paroi latérale de l'alvéole inférieur 6 et ne laisse apparaître que des surfaces lisses, sans aspérités, ne permettant pas de la saisir avec les doigts. Sa surface supérieure 23 qui vient dans le prolongement de la surface supérieure du socle est percée d'un trou d'accrochage 24 accessible à la pointe d'un trombone ou d'un stylobille 25 au moyen de laquelle elle peut être tirée pour ouvrir le verrou. Pour fermer le verrou, elle se repousse simplement avec le doigt.

On peut, sans sortir du cadre de la présente invention, modifier certaines dispositions ou remplacer certains moyens par des moyens équivalents.

## Revendications

1. Montage mécanique de sécurité électrique dans un poste ou terminal téléphonique comportant un socle (1) avec une trappe (7) caractérisé en ce qu'il comporte un verrou de fermeture de trappe présentant, à l'extérieur du socle (1), une tête d'actionnement (13) qui, en position de fermeture du verrou, s'encastre à ras dans la paroi du socle (1) ne laissant apparaître que des surfaces lisses sans aspérité, l'une (23) de ces surfaces étant percée d'un trou d'accrochage (24) accessible uniquement à la pointe d'un outil.

2. Montage selon la revendication 1 caratérisé en ce que le verrou comporte une gâche (10) solidaire de la trappe (7) coopérant avec un pêne (11) réuni à la tête d'actionnement (13) par une tirette (12) qui coulisse à l'intérieur de la paroi du socle (1).

3. Montage selon la revendication 2 caractérisé en ce que le verrou comporte sur la tirette (12) un bossage élastique (18) coopérant avec une cavité (19) de forme complémentaire pratiquée en regard dans la paroi intérieure du socle (1) pour constituer un crantage maintenant le verrou en position fermée.

4. Montage selon la revendication 2 caractérisé en ce que le pêne coulissant (11) se termine du côté de la tirette par un bec (21) venant, à l'ouverture, en butée contre la paroi du boîtier.

5. Montage selon la revendication 2 caractérisé en ce que la tête d'actionnement (13) présente à son point d'attache avec la tirette, un épaulement (22) venant, à la fermeture, en butée contre la paroi du boîtier.

## Claims

1. A mechanical assembly for ensuring electrical safety in a telephone set or terminal of the type comprising a body (1) with a cover (7), characterized in that it includes a lock for closing the cover, said lock presenting an operating head (13) outside the body (1) which head, in the closed position of the lock, fits flush with the wall of the body (1) so that only smooth, relief-free surfaces are visible, one of these surfaces (23) being pierced with a hooking aperture (24) which is accessible only with the tip of a tool.

2. An assembly according to claim 1, characterized in that the lock includes a keeper (10) integral with the cover (7), said keeper co-operating with a latch (11) which is connected to the operating head (13) by a bolt (12) which slides in the wall of the body (1).

3. An assembly according to claim 2, characterized in that the lock includes a resilient boss (18) on the bolt (12), said boss co-operating with a facing complementary cavity (19) formed in the internal wall fo the body (1), forming a catch for maintaining the lock in the closed position.

4. An assembly according to claim 2, characterized in that the sliding latch (11) terminates on the side adjacent to the bolt in a peak (21) which, in the open position, abuts against the wall of the housing.

5. An assembly according to claim 2, characterized in that the operating head (13) presents a shoulder (22) at the point where it is attached to the bolt, said shoulder abutting against the wall of the housing when in the closed position.

## Patentansprüche

1. Elektrisch sichere mechanische Anordnung mit in einem Telefonapparat oder -endgerät mit einem Gehäuse (1), das eine Klappe (7) aufweist, dadurch gekennzeichnet, daß sie einen Riegel zum Verschluß der Klappe aufweist, der außerhalb des Gehäuses (1) einen Betätigungskopf (13) aufweist, welcher sich in der Schließstellung des Riegels in die Seitenwand des Gehäuses (1) einfügt und nur glatte Oberflächen ohne Rauhigkeiten präsentiert, wobei eine dieser Oberflächen (23) ein Einhakloch (24) enthält, in das man nur mit einer Spitze eines Werkzeugs eingreifen kann.

2. Anordnung nach Anspruch 1, dadurch gekennzeichnet, daß der Riegel eine fest mit der Klappe (7) verbundene Falle (10) aufweist, die mit einem Riegel (11) zusammenwirkt, der mit dem Betätigungskopf (13) über einen Schieber (12) verbunden ist, der im Inneren der Wand des Gehäuses (1) gleitet.

3. Anordnung nach Anspruch 2, dadurch gekennzeichnet, daß der Riegel auf dem Schieber (12) einen elastischen Buckel (18) aufweist, der mit einem Hohlraum (19) komplementärer Form zusammenwirkt, welcher gegenüberliegend in der Innenwand des Gehäuses (1) eingearbeitet ist, um eine Einrastung zu bilden, die den Riegel in der Verschlußstellung hält.

4. Anordnung nach Anspruch 2, dadurch gekennzeichnet, daß der Gleitriegel (11) auf der Seite des Schiebers in einer vorstehenden Kante (21) endet, die beim Öffnen gegen die Wand des Gehäuses anschlägt.

5. Anordnung nach Anspruch 2, dadurch gekennzeichnet, daß der Betätigungskopf (13) an seinem Befestigungspunkt am Schieber eine Schulter (22) aufweist, die sich beim Verschließen gegen die Wand des Gehäuses anlegt.
